# EUROPEAN PATENT APPLICATION

(11) **EP 2 664 452 A1**
(43) Date of publication of application: **20.11.2013**
(21) Application number: 12733994.3
(22) Date of filing: 10.01.2012
(51) Int. Cl.: B32B 5/26, B32B 27/32, H01M 2/16

(54) **MULTILAYER MICROPOROUS FILM, PROCESS FOR PRODUCTION OF THE FILM, AND USE OF THE FILM**

(30) Priority: 11.01.2011 US 201161431706 P
(71) Applicant: Toray Battery Separator Film Co., Ltd., Tochigi 329-2763 (JP)
(72) Inventor: BRANT, Patrick, Texas 77586 (US); GEBBEN, Richard V, Tokyo 150-0012 (JP); KONO, Koichi, Tochigi-ken 329-2763 (JP); ISHIHARA, Takeshi, Tochigi-ken 329-2763 (JP)
(74) Representative: Webster, Jeremy Mark
(86) International application number: PCT/JP2012/050236
(87) International publication number: WO 2012/096248

(57) **Abstract**

The invention generally relates to polymer film, and more particularly relates to polymeric membranes, methods for producing such membranes, and the use of such membranes as battery separator film. In an embodiment, the invention relates to liquid-permeable multi-layer microporous membranes comprising microlayers. According to the invention, liquid-permeable multi-layer microporous membranes having excellent physical properties including permeability can be produced without causing delaminate.

## Description

### FIELD OF THE INVENTION

The invention generally relates to microporous membranes and more particularly relates to liquid-permeable multi-layer microporous membranes comprising polymethylpentene, methods for producing such membranes, and the use of such membranes, e.g., as battery separator film.

### BACKGROUND

Microporous membranes can be used as battery separator film ("BSF") in primary and secondary batteries such as lithium ion primary and secondary batteries. For example, PCT Patent Application Publication No. WO 2008/016174A1 discloses a microporous membrane and the use of such a membrane as a battery separator film. The membrane is produced by co-extruding a mixture of polymer and diluent, stretching the extrudate in at least one planar direction, and then removing the diluent.

Large-capacity batteries such as those that can be used to power electric vehicles and hybrid electric vehicles could be improved by increasing the BSFs meltdown temperature and puncture strength without significantly decreasing other important membrane properties such as porosity, permeability, and thermal stability (heat shrinkage).

BSFs comprising polymethylpentene and polyethylene have been produced with improved meltdown temperature, but these membranes generally exhibit lower air permeability, puncture strength, and heat shrinkage compared to similar membranes produced from polyethylene only. Since it has been observed that polymethylpentene can phase-separate from polyethylene, it is believed that the degradation of these membrane properties results at least in part from the difficulty in dispersing polymethylpentene in the polyethylene compared to, e.g., dispersing polypropylene in polyethylene. For example, it has been observed in multilayer membranes comprising polyethylene layers and polymethylpentene layers that a compatibilizer is sometimes needed to prevent interlayer delamination.

### PRIOR ART DOCUMENTS

### PATENT DOCUMENTS

Patent Literature 1: WO2008/016174A1

### SUMMARY OF THE INVENTION

### PROBLEMS TO BE SOLVED BY THE INVENTION

There is therefore a need for improved microporous membranes comprising polyethylene and polymethylpentene. According to the present invention, microporous membrane comprising polyethylene and polymethylpentene can be produced and prevent causing delaminate without reducing significant properties of membrane including porosity and pin puncture strength.

### MEANS FOR SOLVING THE PROBLEMS

In an embodiment, the invention relates to a multi-layer microporous membrane comprising (a) a plurality of first microlayers each comprising a first polymer and having a thickness ≤ 1.0 µm and (b) a plurality of second microlayers each comprising a second polymer and having a thickness ≤ 1.0 µm; wherein the first polymer comprises ≥ 20.0 wt.% polymethylpentene based on the weight of the first polymer, the second polymer comprises > 80.0 wt.% based on the weight of the second polymer of a polymer incompatible with the polymethylpentene of the first polymer, and the multi-layer microporous membrane is liquid permeable and microporous.

In another embodiment, the invention relates to method for making a multi-layer microporous membrane comprising:
manipulating a first layered article comprising first and second layers to produce a second layered article having an increased number of layers, the first layer comprising a first polymer and a first diluent miscible with the first polymer and the second layer comprising a second polymer and a second diluent miscible with the second polymer, wherein (i) the first polymer comprises ≥ 20.0 wt.% polymethylpentene based on the weight of the first polymer and (ii) the second polymer comprises > 80.0 wt.% based on the weight of the second polymer of a polymer incompatible with the polymethylpentene of the first polymer; and
reducing the first layered article's thickness and increasing the first layered article's width before producing the second layered article, and/or reducing the second layered article's thickness and increasing the second layered article's width; and removing at least a portion of the first and second diluents from the second layered article.

In yet another embodiment, the invention relates to a battery comprising an electrolyte, an anode, a cathode, and a separator situated between the anode and the cathode, the separator comprising a multi-layer microporous membrane comprising (a) a plurality of first microlayers each comprising a first polymer and having a thickness ≤ 1.0 µm and (b) a plurality of second microlayers each comprising a second polymer and having a thickness ≤ 1.0 µm; wherein the first polymer comprises ≥ 20.0 wt.% polymethylpentene based on the weight of the first polymer, the second polymer comprises > 80.0 wt.% based on the weight of the second polymer of a polymer incompatible with the polymethylpentene of the first polymer.

### EFFECT OF THE INVENTION

According to the present invention, microporous membrane comprising polyethylene and polymethylpentene which can prevent causing delaminate without reducing significant properties of membrane including porosity and pin puncture strength can be produced.

### BRIEF DESCRIPTION OF DRAWINGS

[Fig.1]Fig. 1 schematically illustrates an extrusion system for making a multi-layer microporous membrane.
[Fig.2]Fig. 2 schematically illustrates extrudates made by the process of Fig. 1.
[Fig.3]Fig. 3 schematically illustrates an alternative extrusion system for making the multi-layer microporous membrane.
[Fig.4]Fig. 4 schematically illustrates layer-multiplication stages that can be used to produce microlayer extrudates.

### BEST MODE FOR CARRING OUT OF THE INVENTION

Conventional multilayer microporous membranes, such as those produced by coextrusion in a "wet" process, have layer thicknesses > 1.0 µm. Such membranes have been produced with a first layer comprising ≥ 20.0 wt.% polymethylpentene based on the weight of the first layer and a second layer comprising > 80.0 wt.% polyethylene based on the weight of the second layer. These membranes have improved meltdown temperature, but can exhibit delamination during production. It is believed that the delamination results from incomplete dispersion of the polymethylpentene which leads to a relatively large difference in surface tension between the first and second layers. Although the membranes have improved meltdown temperature, it is observed that they have diminished permeability and puncture strength compared to membranes having a second layer consisting essentially of polyethylene. A portion of the permeability and puncture strength can be recovered by including ≥ 10.0 wt.% polypropylene in the first layer, but this undesirably reduces the membrane's meltdown temperature. The amount of delamination can be reduced by including a compatibilizer (e.g., polypropylene or polymethylpentene) in the second layer, but this can lead to an undesirable decrease in membrane puncture strength and air permeability.

The invention is based in part on the discovery that improving the dispersion of polymethylpentene in the membrane results in membranes that are resistant to delamination and have high meltdown temperature, high puncture strength, and high air permeability. One way to disperse the polymethylpentene involves producing a layered extrudate from first and second mixtures, the first mixture comprising a first polymer and a first diluent and the second mixture comprising a second polymer and second diluent, wherein (i) the first polymer comprises ≥ 20.0 wt.% polymethylpentene based on the weight of the first polymer, e.g., ≥ 25.0 wt.%, such as ≥ 30.0 wt.% polymethylpentene; and (ii) the second polymer comprises > 80.0 wt.% based on the weight of the second polymer of a polymer that is incompatible with the polymethylpentene of the first polymer (e.g., polyethylene homopolymer), e.g., ≥ 85.0 wt.%, such as ≥ 90.0 wt.% of a polymer that is incompatible with the polymethylpentene of the first polymer. The layered extrudate is then manipulated by a series of multiplying steps to form a microlayer extrudate with microlayers comprising the first mixture alternating with microlayers comprising the second mixture. At least a portion of the diluent is removed from the manipulated extrudate to produce the membrane. In an embodiment, the membrane is microporous and liquid-permeable at atmospheric pressure. Although the membrane can contain polyolefin only, this is not required, and it is within the scope of the invention for the membrane to contain polyolefin and compositions that are not polyolefin.

The resulting membranes comprise a plurality of microlayers, optimally with each microlayer having a thicknesses ≤ 1.0 µm, e.g., ≤ 0.1 µm, such as ≤ 0.01 µm. It is observed that such membranes, resistant to delamination, and have an improved balance of important membrane properties, such as shutdown temperature, meltdown temperature, pin puncture strength, etc. over membranes produced by extruding mixtures of polyethylene and polymethylpentene.

For the purpose of this description and the appended claims, the term "polymer" means a composition including a plurality of macromolecules, the macromolecules containing recurring units derived from one or more monomers. The macromolecules can have different size, molecular architecture, atomic content, etc. The term "polymer" includes macromolecules such as copolymer, terpolymer, etc. "Polyolefin" means polymer containing ≥ 50.0% (by number) recurring olefin-derived units, preferably homopolymer and/or copolymer thereof wherein at least 85% (by number) of the recurring units are olefin-derived units. "Polyethylene" ("PE") means polyolefin containing ≥ 50.0% (by number) recurring ethylene-derived units, preferably polyethylene homopolymer and/or polyethylene copolymer wherein at least 85% (by number) of the recurring units are ethylene-derived units. "Polypropylene" ("PP") means polyolefin containing > 50.0% (by number) recurring propylene-derived units, preferably polypropylene homopolymer and/or polypropylene copolymer wherein at least 85% (by number) of the recurring units are propylene units. "Polymethylpentene" ("PMP") means polyolefin containing > 50.0% (by number) recurring methylpentene-derived units, preferably polymethylpentene homopolymer and/or polymethylpentene copolymer wherein at least 85% by (number) of the recurring units are methylpentene units.

"A polymer incompatible with the polymethylpentene of the first polymer" means a polymer or polymer mixture (e.g., a blend) having (i) a Hildebrand solubility parameter >19.0 (MPa)^{1/2} and (ii) a melting point ≤ 140.0°C.

A "microporous membrane" is a thin film having pores, where ≥ 90.0 percent (by volume) of the film's pore volume resides in pores having average diameters in the range of from 0.01 µm to 10.0 µm. With respect to membranes produced from extrudates, the machine direction ("MD") is defined as the direction in which an extrudate is produced from a die. The transverse direction ("TD") is defined as the direction perpendicular to both MD and the thickness direction of the extrudate.

Examples of selected multi-layer microporous membranes will now be described in more detail. The following description exemplifies selected embodiments and is not meant to foreclose other embodiments within the broader scope of the invention.

### Multi-layer Microporous Membranes

In an embodiment, the invention relates to multi-layer microporous membranes comprising a plurality of coextruded microlayers, at least one microlayer comprising ≥ 20.0 wt.% PMP based on the weight of the second polymer. In an embodiment, the multi-layer microporous membrenes include a plurality of first microlayers comprising a first polymer and a plurality of second microlayers comprising a second polymer different from the first polymer, the first polymer comprising > 80.0 wt.% of a polyolefin other than PMP based on the weight of the first polymer and (ii) the second polymer comprising ≥ 20.0 wt.% PMP based on the weight of the second polymer.

The multi-layer microporous membranes of the invention are more resistant to delamination than conventional layered membranes of the substantially the same composition, even when no compatibilizer is included in the second microlayer. For example, in one embodiment, the second microlayers consist essentially of (or consist of) PE and the first microlayers consist essentially of (or consist of) PMP. While not wishing to be bound by any theory or model, it is believed that the membranes of the invention retain structural integrity (e.g., resist delamination) at least partially as a result of the smaller PMP domain size in the PMP microlayers compared to those of conventional multilayer membranes comprising PMP layers.

In an embodiment, the plurality of first and second microlayers are arranged in a series of substantially parallel repeating units, where each unit comprises at least one of the first microlayers and at least one of the second microlayers. A unit can further comprise one or more interfacial regions comprising first and second polymer, each interfacial being located between a first and second microlayer. For example, a unit can have a plurality of first microlayers alternating with a plurality of second microlayers, with an interfacial region optionally situated between each of the first and second microlayers in, e.g., an A/B/A/B/A/B/A... or B/A/B/A/B/A/... or A/R/B/R/A/R/B/R/A/R/B/R/A/R/B/R.... or B/R/A/R/B/R/A/B/R/A/R... relationship, where "A" represents the first microlayers, "B" represents the second microlayers, and "R" represents interfacial regions between first and second microlayers. Optionally, the membrane further comprises additional layers, which can be microlayers if desired. Such additional layers can be located on either side of the microlayers, e.g., between first and second microlayers. For the purpose of the specification and claims hereof, the term "microlayer" is not intended to encompass interfacial regions as might result from layers containing the first polymer and first diluent contacting layers containing the second polymer and second diluent.

In an embodiment, the multi-layer microporous membrane is liquid permeable, e.g., permeable to liquid electrolyte at atmospheric pressure when the membrane is used as a battery separator film. The liquid permeability is provided by tortuous pathways through the first and second microlayers, and through the interfacial regions when these are present.

In an embodiment, the membrane's individual microlayers have a thickness in the range of 25.0 nm to 0.75 µm and has one or more of the following optional properties: all of the microlayers of the membrane have approximately the same thickness; the microlayers containing the first polymer can all have approximately the same thickness; the microlayers containing the second polymer all have approximately the same thickness; or the thicknesses of a microlayer containing the first polymer is approximately the same as at least one of the adjacent microlayers containing the second polymer. Generally, microlayer thickness is ≥ about two times the radius of gyration of the polymer ("Rg") in the microlayer, e.g., in the range of 25.0 nm to 1.0 µm, e.g., 100 nm to 0.75 µm, or 250 nm to 0.5 µm. Rg can be determined by the methods described in PCT Patent Application Publication No. WO 2010/048397, which is incorporated by reference herein in its entirety. While the first and second microlayers can be continuous in a plane substantially parallel to the membrane's planar surface, this is not required, and discontinuous microlayers (e.g., islands) are within the scope of the invention.

In an embodiment, the first and second microlayers are produced by extrusion and manipulation of first and second polymer-diluent mixtures. In embodiments where the first diluent is compatible with or soluble in the second diluent, the multi-layer microporous membrane can further comprise interfacial regions located between opposed first and second microlayers. Thus, in one embodiment the membrane further compromises liquid-permeable interfacial region, wherein the interfacial region is (i) defined as a region located between the first microlayers and (ii) comprises the first and second polymers. While the interfacial regions can be continuous in a plane substantially parallel to the membrane's planar surface, this in not required, and discontinuous interfacial regions (e.g., islands) are within the scope of the invention. Optionally, each interfacial region is a continuous region having a thickness ≥ 25.0 nm, e.g., in the range of 25.0 nm to 5.0 µm, such as 100.0 nm to 1.0 µm, or 250.0 nm to 0.75 µm. Microlayers and interfacial regions can be imaged (e.g., for the purpose of measuring thickness) using, e.g., TEM, as described in Chaffin, et al., Science 288, 2197-2190.

In an embodiment, the membrane comprises pairs of microlayers, with one microlayer of each pair comprising the first polymer and the other microlayer comprising the second polymer but having approximately the same thickness as the first microlayer of the pair, e.g., ≤ 1.0 µm. Optionally, the membrane has a symmetry plane parallel to the planar surfaces of the membrane and located, e.g., approximately midway through the membrane in the thickness direction. Optionally, each microlayer in a pair of microlayers is disposed on opposite sides of the symmetry plane, e.g., approximately equidistant from the symmetry plane. Examples of such membranes are described in PCT Patent Application Publication No. WO 2010/048397.

Four-microlayer and eight-microlayer membranes are examples of membranes within the scope of the invention, but the invention is not limited thereto. The membrane can, e.g., comprise a number of interior microlayers ≥ 2, e.g., ≥ 4, or ≥ 16, or ≥ 32, or ≥ 64, such as in the range of 2 to 1.0 x 10⁶ layers, or 8 to 2,048 layers, or 16 to 1,024 layers; and the number of optional interfacial regions is ≥ 3, e.g., ≥ 5, or ≥ 15, or ≥ 31, or ≥ 63, such as in the range of 3 to (10⁶ -1) interfacial regions, or 7 to 2,047 interfacial regions, or 15 to 1,023 interfacial regions.

In an embodiment, the membrane has at least 4 microlayers and is a symmetric membrane comprising two outer layers that can be skin layers and an even number of interior microlayers disposed in pairs of layers, with (i) each microlayer of the pair having the same thickness and located equidistant from the membrane's symmetry axis and (ii) one microlayer of the pair comprising the first polymer and the other comprising the second polymer. The outer layers can be microlayers having a thickness > than the thickness of the interior microlayers, with the microlayers of the pairs closer to the membrane's symmetry plane having progressively smaller thicknesses. The central pair of microlayers, located adjacent to and on either side of the membrane's symmetry plane, have the smallest thickness.

In an embodiment, the liquid-permeable multi-layer microporous membrane's symmetry plane bisects the center-most interfacial region in the membrane. Optionally, the membrane contains an odd number of interfacial regions. Optionally, interfacial region closest to the membrane's symmetry plane (which can, e.g., be bisected by the symmetry plane) has the smallest thickness among the interfacial regions. The remaining interfacial regions can be disposed as pairs of interfacial regions, with each interfacial region of the pair optionally being of approximately equal thickness and optionally being located approximately equidistant from the symmetry plane. Optionally, the interfacial regions adjacent to the outer pair of layers have the greatest thickness, with the pairs of interfacial regions closer to the membrane's symmetry plane having progressively smaller thicknesses.

The multi-layer microporous membrane generally comprises the polymers or combination of polymers used to produce the membrane. A small amount of diluent or other species introduced during processing can also be present, generally in amounts less than about 1 wt.% based on the weight of the liquid-permeable multi-layer micro porous membrane. A small amount of polymer molecular weight degradation might occur during processing, but this is acceptable. In an embodiment, molecular weight degradation during processing, if any, results in the polymer in the membrane having an Mw that is within 5.0%, e.g., within 1.0%, such as within 0.1 % of the Mw of the polymer used to produce the membrane.

Materials that can be used to produce the multi-layer microporous membrane will now be described in more detail. While the invention is described in terms of these embodiments, it is not limited thereto, and the description of these embodiments is not meant to foreclose other embodiments within the broader scope of the invention.

### Materials used to produce the liquid-permeable multi-layer microlporous membrane

In an embodiment, the membrane comprises ≥ four microlayers, with at least two microlayers produced from the first polymer and at least two microlayers produced from a second polymer. The first polymer comprises ≥ 20.0 wt.% PMP based on the weight of the first polymer and the second polymer comprises > 80.0 wt.% (based on the weight of the second polymer) of a polymer incompatible with the PMP of the first polymer. The first and second polymers can each be a combination (e.g., a mixture) of polymers, such as a polyolefin mixture. For example, the second polymer can comprise polyethylene, polypropylene, or both polyethylene and polypropylene.

The second polymer is not the same as the first polymer, and optionally is not miscible in the first polymer. For example, when the second polymer comprises > 80.0 wt.% PE based on the weight of the second polymer, the first polymer can comprise, e.g., ≥ 20.0 wt.% PMP and ≥ 40.0 wt.% PE based on the weight of the first polymer.

Optionally, the relative thicknesses of the individual microlayers is such that total amount of first polymer (the "first amount") and the total amount of second polymer (the "second amount") in the multi-layer microlayer membrane are each > 1.0 wt.% based on the weight of the membrane. For example, the first and second amounts can each be in the range of from about 10.0 wt.% to about 90.0 wt.%, or from about 30.0 wt.% to about 70.0 wt.%, based on the weight of the multi-layer microlayer membrane, with the remaining weight of the membrane being the first or second polymer and, optionally, other species. For example, in one embodiment the membrane includes substantially equal amounts of first and second polymer, e.g., both about 50 wt.%, based on the weight of the membrane.

The first and second polymers will now be described in terms of embodiments where the first polymer comprises ≥ 20.0 wt.% PMP based on the weight of the first polymer and the second polymer comprises > 80.0 wt.% PE based on the weight of the second polymer. While the invention is described in terms of these embodiments, it is not limited thereto, and the description of these embodiments is not meant to foreclose other embodiments within the broader scope of the invention.

### The first polymer

In an embodiment, the first polymer comprises ≥ 20.0 wt.% PMP based on the weight of the first polymer. Optionally, the first polymer comprises PP and one or more of PE1, PE2, or PE3. These polymers will now be described in more detail.

### PMP

In an embodiment, the first polymer comprises PMP. Optionally, the PMP has a melting point (Tm) ≥ 200.0°C, e.g., in the range of from 200.0°C to 250.0°C, such as from 210.0°C to 240.0°C, or from about 220.0°C to about 230.0°C. The PMP's Tm can be determined by differential scanning calorimetry methods similar to those described below for polypropylene.

In an embodiment, the PMP has a melt flow rate ("MFR" measured according to ASTM D 1238; 260°C/5.0 kg) ≤ 30.0 dg/min., e.g., ≤ 10.0 dg/min., such as ≤ 1.0 dg/min, or ≤ 0.10 dg/min. In other words, the MFR of the PMP can be so small that it is essentially not measurable. For example, the PMP MFR can be in the range of from about 0.1 dg/min. to 30.0 dg/min., such as from about 0.1 dg/min. to about 10.0 dg/min, e.g., in the range of 0.1 dg/min to 1.0 dg/min. In an embodiment, the PMP has an Mw ≥ 1.0 x 10⁴, e.g., ≥ 1.0 x 10⁵, such as in the range of 1.0 x 10⁴ to 4.0 x 10⁶. The PMP's Mw can be determined by gel permeation chromatography methods similar to those described below for polypropylene.

In an embodiment, the PMP has an MFR ≤ 1.0 dg/min, e.g., ≤ 0.10 dg/min., and a Tm in the range of 215°C to 225°C.

The PMP can be produced, e.g., in a polymerization process using a Ziegler-Natta catalyst system (such as catalyst systems containing titanium or titanium and magnesium) or a "single site catalyst". In an embodiment, the PMP is produced using methylpentene-1 monomer, such as 4-methylpentene-1, or methylpentene-1 with one or more comonomers, such as α-olefin by coordination polymerization. Optionally, the α-olefin is one or more of butane-1, pentene-1, 3-methylbutene-1, hexene-1, 4-methylpentene-1, heptene-1, octane-1, nonene-1, and decene-1. Cyclic comonomer(s) such as cyclopentene, 4-methylcyclopentene, norbornene, tricyclo-3-decene, etc., can also be used. In an embodiment, the comonomer is hexene-1. The comonomer content in the PMP is generally < 20.0 mol%.

The PMP can be a mixture of PMPs (e.g., dry mixed or a reactor blend), to produce a mixture having a Tm ≤ 250.0°C, e.g., ≤ 240.0°C.

In an embodiment, the first polymer further comprises PE and/or PP. Examples of suitable PE and PP will not be described in more detail.

### PE1

In an embodiment, PE1 comprises polyethylene having a Tm > 130.0°C, e.g., ≥ 131.0°C (such as in the range of 131.0°C to 135.0°C) and an Mw < 1.0 x 10⁶, e.g., in the range of from 1.0 x 10⁵ to 9.0 x 10⁵, for example from about 4.0 x 10⁵ to about 8.0 x 10⁵. Optionally, the PE1 has a molecular weight distribution ("MWD") ≤ 20.0, e.g., in the range of from 2.0 to 15.0, such as from about 3.0 to about 12.0. For example, the PE1 can be one or more of a high density polyethylene ("HPDE"), a medium density polyethylene, a branched low density polyethylene, or a linear low density polyethylene. In an embodiment, the PE1 is HDPE. Optionally, the PE1 has terminal unsaturation. For example, the PE1 can have an amount of terminal unsaturation ≥ 0.20 per 10,000 carbon atoms, e.g., ≥ 5.0 per 10,000 carbon atoms, such as ≥ 10.0 per 10,000 carbon atoms. The amount of terminal unsaturation can be measured in accordance with the procedures described in PCT Patent Application Publication No. WO 1997/23554, for example. In another embodiment, the PE1 has an amount of terminal unsaturation < 0.20 per 10,000 carbon atoms.

In an embodiment, PE1 is at least one of (i) an ethylene homopolymer or (ii) a copolymer of ethylene and ≤ 10 mol% of a comonomer such as α-olefin. Such a polymer or copolymer can be produced by any convenient polymerization process, such as those using a Ziegler-Natta or a single-site catalyst. Optionally, the comonomer is one or more of propylene, butene-1, pentene-1, hexene-1, 4-methylpentene-1, octene-1, vinyl acetate, methyl methacrylate, styrene, or other monomer.

### PE2

In an embodiment, PE2 comprises polyethylene having an Mw ≥ 1.0 x 10⁶, e.g., in the range of 1.1 x 10⁶ to about 5.0 x 10⁶, for example from about 1.2 x 10⁶ to about 3.0 x 10⁶, such as about 2.0 x 10⁶. Optionally, the PE2 has an MWD ≤ 20.0, e.g., from about 2.0 to about 15.0, such as from about 4.0 to about 12.0 or about 4.5 to about 10.0. For example, PE2 can be an ultra-high molecular weight polyethylene ("UHMWPE").

In an embodiment, PE2 is at least one of (i) an ethylene homopolymer or (ii) a copolymer of ethylene and ≤ 10.0 mol% of a comonomer such as α-olefin. Optionally, the comonomer is one or more of propylene, butene-1, pentene-1, hexene-1, 4-methylpentene-1, octene-1, vinyl acetate, methyl methacrylate, styrene, or other comonomer. Such a polymer or copolymer can be produced using any convenient polymerization process such as those using a Ziegler-Natta or a single-site catalyst.

### PE3

In an embodiment, PE3 comprises polyethylene having a Tm ≤ 130.0°C. Using PE3 having a Tm ≤ 130.0°C can provide the finished liquid-permeable membrane with a desirably low shutdown temperature, e.g., a shutdown temperature ≤ 130.5°C.

Optionally, PE3 has a Tm ≥ 85.0°C, e.g., in the range of from 105.0°C to 130.0°C, such as 115.0°C to 126.0°C, or 120.0°C to 125.0°C, or 121.0°C to 124.0°C. Optionally, the PE3 has an Mw ≤ 5.0 x 10⁵, e.g., in the range of from 1.0 x 10³ to 2.0 x 10⁵, such as in the range of from 1.5 x 10³ to about 1.0 x 10⁵. Optionally, the PE3 has an MWD in the range of from 2.0 to 5.0, e.g., 1.8 to 3.5. Optionally, PE3 has a mass density in the range of 0.905 g/cm³ to 0.935 g/cm³. Polyethylene mass density is determined in accordance with ASTM D1505.

In an embodiment, PE3 is a copolymer of ethylene and ≤ 10.0 mol% of a comonomer such as α-olefin. The comonomer can be, e.g., one or more of propylene, butene-1, pentene-1, hexene-1, 4-methylpentene-1, octene-1, vinyl acetate, methyl methacrylate, styrene, or other monomer. Optionally, the comonomer amount is in the range of 1.0 mol% to 5.0 mol%. In an embodiment, the comonomer is hexene-1 and/or or octane-1.

PE3 can be produced in any convenient process, such as those using a Ziegler-Natta or single-site polymerization catalyst. Optionally, PE3 is one or more of a low density polyethylene ("LDPE"), a medium density polyethylene, a branched low density polyethylene, or a linear low density polyethylene, such as a polyethylene produced by metallocene catalyst.

Polyethylenes PE1, PE2, and PE3 can be the same as those described in PCT Patent Application Publication No. WO 2010/114676.

In one embodiment, the first polymer comprises ≤ 100.0 wt.% PMP, e.g., in the range of 20.0 wt.% to 90.0 wt.%, such as 25.0 wt.% to 85.0 wt.%; ≤ 80.0 wt.% PE1, e.g., in the range of from 10.0 wt.% to 80.0 wt.%, such as 15.0 wt.% to 75.0 wt.%; ≤ 80.0 wt.% PE2, e.g., in the range of from 10.0 wt.% to 80.0 wt.%, such as 15.0 wt.% to 75.0 wt.%; and ≤ 30.0 wt.% PE3, e.g., in the range of from 0 wt.% to 20.0 wt.%, such as 1.0 wt.% to 15.0 wt.%; the weight percents being based on the weight of the first polymer.

### The Second Polymer

In an embodiment, the second polymer comprises > 80.0 wt.% based on the weight of the second polymer of a polymer incompatible with the PMP of the first polymer, e.g., > 80.0 wt.% PE based on the weight of the second polymer. Optionally, the second polymer comprises PE homopolymer and/or PE copolymer wherein at least 85% (by number) of the recurring units are derived from ethylene units. The second polymer can be a mixture of individual polymer components or a reactor blend. Optionally, the PE comprises a PE mixture or PE reactor blend, such as a mixture of two or more PEs ("PE1", "PE2", "PE3", etc.). PE1, PE2, and PE3 can be the same as those described for the first polymer.

Optionally, the second polymer further comprises PP, e.g., < 20.0 wt.% PP based on the weight of the second polymer, e.g., ≤ 10.0 wt.% PP, such as in the range of 1.0 wt.% to 20.0 wt.% PP. The PP can be the same as that described in U.S. Patent Application Publication No. 2007/132942, which is incorporated by reference herein in its entirety.

Optionally, the second polymer includes < 20.0 wt.% PMP based on the weight of the second polymer, e.g., ≤ 10.0 wt.% PMP, such as in the range of 1.0 wt.% to 20.0 wt.% PMP. In an embodiment, the second polymer is substantially free of PMP, where "substantially free" in this context means that the second polymer contains ≤ 0.01 wt.% PMP based on the weight of the second polymer. The PMP can be the same PMP as that described above for the first polymer.

In one embodiment, the second polymer comprises ≤ 99.0 wt.% PE1, e.g., in the range of from 25.0 wt.% to 99.0 wt.%, e.g., from 50.0 wt.% to 95.0 wt.%, or 60.0 wt.% to 85.0 wt.%; ≤ 99.0 wt.% PE2, e.g., in the range of from 0 wt.% to 74.0 wt.%, e.g., 1.0 wt.% to 46.0 wt.%, or 7.0 wt.% to 32.0 wt.%; and ≥ 1.0 wt.% PE3, e.g., in the range of 1.0 wt.% to 30.0 wt.%, such as 4.0 wt.% to 17.0 wt.%, or 8.0 wt.% to 13.0 wt.%; the weight percents being based on the weight of the second polymer.

### Methods for characterizing the first and second polymers

Tm is measured in accordance with JIS K7122. A polymer sample (0.5-mm- thick molding melt-pressed at 210°C) is placed at ambient temperature in a sample holder of a differential scanning calorimeter (Pyris Diamond DSC available from Perkin Elmer, Inc.), heat-treated at 230°C for 1 minute in a nitrogen atmosphere, cooled to 30°C at 10°C/min, kept at 30°C for 1 minute, and heated to 230°C at a speed of 10°C/min. Tm is defined as the temperature of the greatest heat absorption within the range of melting as determined from the DSC curve. Polymers may show secondary melting peaks adjacent to the principal peak, and or the end-of-melt transition, but for purposes herein, such secondary melting peaks are considered together as a single melting point, with the highest of these peaks being considered the Tm.

Mw and MWD are determined using a High Temperature Size Exclusion Chromatograph, or "SEC", (GPC PL 220, Polymer Laboratories), equipped with a differential refractive index detector (DRI). The measurement is made in accordance with the procedure disclosed in "Macromolecules, Vol. 34, No. 19, pp. 6812-6820 (2001)". Three PLgel Mixed-B columns available from (available from Polymer Laboratories) are used for the Mw and MWD determination. For PE, the nominal flow rate is 0.5 cm³/min; the nominal injection volume is 300 µL; and the transfer lines, columns, and the DRI detector are contained in an oven maintained at 145°C. For PP, the nominal flow rate is 1.0 cm³/min; the nominal injection volume is 300 µL; and the transfer lines, columns, and the DRI detector are contained in an oven maintained at 160°C.

The GPC solvent used is filtered Aldrich reagent grade 1,2,4-Trichlorobenzene (TCB) containing approximately 1,000 ppm of butylated hydroxy toluene (BHT). The TCB was degassed with an online degasser prior to introduction into the SEC. The same solvent is used as the SEC eluent. Polymer solutions were prepared by placing dry polymer in a glass container, adding the desired amount of the TCB solvent, and then heating the mixture at 160°C with continuous agitation for about 2 hours. The concentration of polymer solution is 0.25 to 0.75mg/ml. Sample solution are filtered off-line before injecting to GPC with 2 µm filter using a model SP260 Sample Prep Station (available from Polymer Laboratories).

The separation efficiency of the column set is calibrated with a calibration curve generated using a seventeen individual polystyrene standards ranging in Mp ("Mp" being defined as the peak in Mw) from about 580 to about 10,000,000. The polystyrene standards are obtained from Polymer Laboratories (Amherst, MA). A calibration curve (logMp vs. retention volume) is generated by recording the retention volume at the peak in the DRI signal for each PS standard and fitting this data set to a 2nd-order polynomial. Samples are analyzed using IGOR Pro, available from Wave Metrics, Inc.

### The first and second diluents

The liquid-permeable multi-layer microporous membrane is produced by combining the first polymer and a first diluent to produce a first mixture and the second polymer with a second diluent to produce a second mixture. The diluent used to produce a mixture is selected from among those diluents capable of dispersing, dissolving, or forming a slurry with the polymer used to produce the mixture. For examples, the first and second diluents can be solvents for the first and second polymers respectively. In this case, the diluents may be referred to as "membrane-forming" solvents. Optionally, the first and second diluents are mixtures of diluents.

In an embodiment where it is desired to form liquid-permeable interfacial regions between adjacent liquid-permeable microporous membrene, the first and second diluents are miscible with each other. Optionally, the first and second diluents are substantially the same diluent. In an embodiment, both the first and second diluents are solvents for PMP, PE, and PP, such as liquid paraffin. The first and second diluents can be selected from among those described in PCT Patent Application Publication No. WO 2008/016174, which is incorporated by reference herein in its entirety. The diluents can also be selected from among those described in U.S. Published Patent Application No. 2006/0103055, e.g., diluents that undergo a thermally-induced liquid-liquid phase separation at a temperature not lower than the polymer's crystallization temperature.

### Other species

Although the multi-layer microporous membranes of the invention can contain other species (such as inorganic species containing silicon and/or aluminum atoms), and/or heat-resistant polymers such as those described in PCT Patent Application Publication No. WO 2008/016174, these are not required. In an embodiment, the multi-layer microporous membrane is substantially free of such materials. Substantially free in this context means the amount of such materials in the liquid-permeable multi-layer microporous membrane is less than about 1.0 wt.%, for example less than about 0.1 wt.%, or less than about 0.01 wt.%, based on the total weight of the liquid-permeable multi-layer microporous membrane.

Optionally, non-polymeric species are included in the first and/or second polymer. Such species include antioxidants, fillers, etc., and combinations thereof. Optionally, the filler is organic or inorganic, and, e.g., in the form of individual, discrete particles. Suitable inorganic filler materials include, e.g., metal oxides, metal hydroxides, metal carbonates, metal sulfates, various kinds of clay, silica, alumina, powdered metals, glass microspheres, other void-containing particles, and combinations thereof.

In an embodiment, particulate filler material is present in the first and/or second polymer in an amount in the range of about 0.50 wt.% to about 80.0 wt.%, based on the weight of the polymer. Optionally, filler particle size (e.g., diameter) is ≤ 10.0 µm, e.g., ≤ 1.0 µm, such as in the range of 0.01 µm to 0.75 µm.

### Methods for producing the multi-layer microporous membrane

### Producing a microlayer extrudate

In an embodiment, the liquid-permeable multi-layer microporous membrane is produced from a layered polymeric article, e.g., a layered extrudate. Among the suitable methods for producing the layered extrudate are those described in PCT Patent Application Publication No. WO 2010/048397, but the invention is not limited thereto, and the description in that reference and the production methods described herein are not meant to foreclose other embodiments within the broader scope of the invention.

In one embodiment, the layered polymeric extrudate has a first layer comprising the first polymer and a second layer comprising the second polymer. The first and second polymers can be produced from, e.g., the polymer resins described in the preceding section, such as resins of PE1, PE2, PE3, PP, and/or PMP. The polymer is combined with at least a one first diluent to form a first mixture and the second polymer is combined with at least a second diluent to form a second mixture. A first layered article having at least two layers is formed from the first and second mixtures, e.g., by extrusion, coextrusion, or lamination, wherein the layered article comprises at least one layer containing the first mixture and a second layer containing the second mixture.

In an embodiment, the layered article is produced by coextruding first and second mixtures, the first mixture comprising a first polymer and a first diluent and the second mixture comprising a second polymer and second diluent, wherein (i) the first polymer is incompatible with the second polymer, (ii) the first polymer is compatible with the second diluent, (iii) the second polymer is compatible with the first diluent, and (iv) the first and second diluents are compatible. The following description is provided as an example, and is not meant to foreclose other embodiments within the broader scope of the invention, such as embodiments where the first and second diluents are incompatible and embodiments where the layered article is produced by methods such as casting and/or lamination.

In an embodiment, the layered extrudate is produced by:
(1) combining a first polymer and a first diluent to form a first mixture, and combining a second polymer and a second diluent to form a second mixture;
(2) coextruding the first and second mixtures through a die to form a first layered extrudate having a first thickness;
(3) manipulating the first layered extrudate to form a second layered extrudate having a second thickness greater than the first thickness and an increased number of layers compared to the first layered extrudate; and
(4) reducing the second thickness, e.g., to about the first thickness or less.

In addition to these steps, one or more optional cooling steps (2a) can be conducted at one or more points following step (2), an optional step (4a) for stretching the extrudate can be conducted after step (4). The order of the optional steps is not critical.

### 1. Preparation of the first and second mixtures

### (A) Preparation of the first mixture

In an embodiment, the first polymer comprises PE1 and PE3; and optionally PE2. Polymers are combined, for example, by dry mixing or melt blending with a first diluent to produce the first mixture. The first mixture can contain additives such as, for example, one or more antioxidants. In an embodiment, the amount of such additives does not exceed about 1.0 wt.% based on the weight of the first mixture. The choice of first diluent, mixing conditions, extrusion conditions, etc. can be the same as those disclosed in PCT Patent Application Publication No. WO 2008/016174, for example.

The amount of first polymer in the first mixture can be in the range of from 25 wt.% to about 99 wt.% , e.g., about 5 wt.% to about 40 wt.%, or 15 wt.% to about 35 wt.%, based on the combined weight of the first polymer and diluent in the first mixture.

### (B) Preparation of the second mixture

In an embodiment, the second polymer comprises and PE1 and optionally PE2. The second mixture can be prepared by the same method used to prepare the first mixture. For example, the second mixture can be prepared by melt-blending the polymer resins with a second diluent. The second diluent can be selected from among the same diluents as the first diluent.

The amount of second polymer in the second mixture can be in the range of from 25 wt.% to about 99 wt.%, e.g., about 5 wt.% to about 40 wt.%, or 15 wt.% to about 35 wt.%, based on the combined weight of the second polymer and diluent. The first polymer can be combined with the first diluent and the second polymer can be combined with the second diluent at any convenient point in the process, e.g., before or during extrusion.

### 2. Extrusion

In an embodiment, the first mixture is coextruded with the second mixture to make a first layered extrudate having a first thickness and comprising a first extrudate layer (formed from the first mixture) and a second extrudate layer (formed from the second mixture). Optionally, the extrudate further comprises a surface of the first extrudate layer separated from a surface of the second extrudate layer by an interfacial region comprising the first polymer, the second polymer, the first diluent, and the second diluent. The choice of die and extrusion conditions can be the same as those disclosed in PCT Patent Application Publication No. WO 2008/016174, for example. The first and second mixtures are generally exposed to an elevated temperature during extrusion (the "extrusion temperature"). For example, the extrusion temperature is ≥ the melting point ("Tm") of the polymer in the extrudate (first polymer or second polymer) having the higher melting point. In an embodiment, the extrusion temperature is in the range of Tm + 10°C to Tm + 120°C, e.g., in the range of about 170°C to about 230°C.

In continuous and semi-continuous processing, the direction of extrusion (and subsequent processing of the extrudates and membrane) is called the machine direction, or "MD". The direction perpendicular to both the machine direction and the thickness of the extrudate (and membrane) is called the transverse direction, or "TD". The planar surfaces of the extrudate (e.g., the top and bottom surfaces) are defined by planes containing MD and TD.

While the extrusion can be used to make extrudates having two layers, the extrusion step is not limited thereto. For example, a plurality of dies and/or die assemblies can be used to produce a first layered extrudate having four or more layers using the extrusion methods of the preceding embodiments. In such a first layered extrudate, each outer or interior layer can be produced using either the first mixture and/or the second mixture.

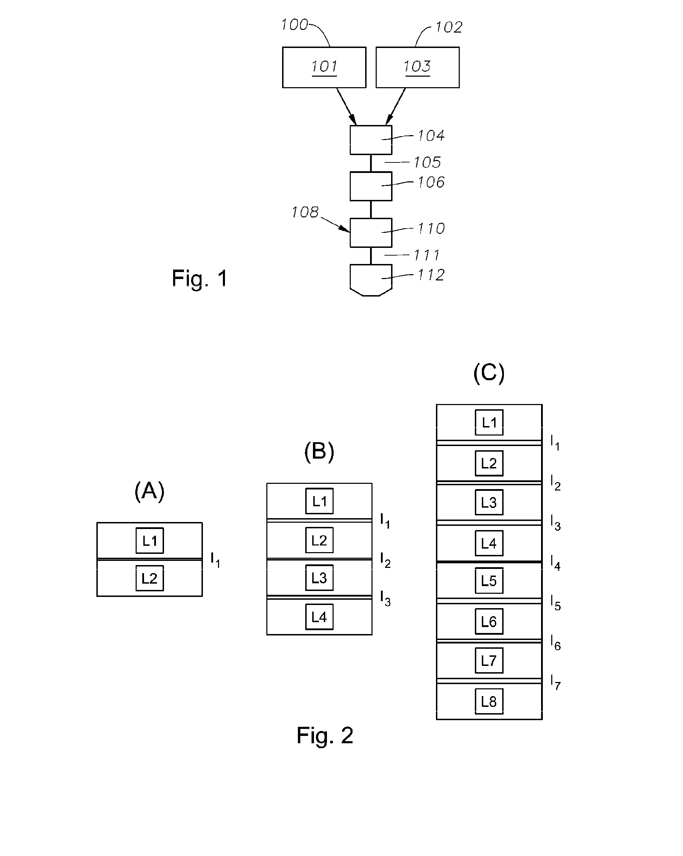

One embodiment for making the first layered extrudate is illustrated schematically in Fig. 1. First and second mixtures (100 and 102) are conducted to a multilayer feedblock 104. Typically, melting and initial feeding is accomplished using an extruder for each mixture. For example, first mixture 100 can be conducted to an extruder 101 and second mixture 102 can be independently conducted to a second extruder 103. The multilayer extrudate 105 is conducted away from feedblock 104. Multilayer feedblocks are conventional, and are described, for example, in U.S. Patents No. 6,827,886; 3,773,882; and 3,884,606 which are incorporated herein by reference in their entirety.

### 3. Forming the second layered extrudate

A second layered extrudate having a second thickness greater than the thickness of the first layered extrudate (the first thickness) and a greater number of layers than the first layered extrudate can be produced by any convenient method. For example, the first extrudate can be divided into two or more sections (e.g., along MD), with the sections then stacked in planar (e.g., face-to face) contact. In this context, face-to-face contact means a planar surface of the first section is placed in contact with a planar surface of the second section, e.g., as when the first section's bottom (planar) surface is placed in contact with the second section's top (planar) surface. Fig. 2(A) illustrates this in cross section for an embodiment where polymer-solvent compatibility among the layers results in the growth of an interfacial region I1 between the first and second sections after the sections are placed in planar contact. In another embodiment, the first extrudate is folded (e.g., along MD) one or more times to produce adjacent folds in planar contact. Increasing the thickness of the first extrudate and the number of layers thereof to produce the second extrudate can be called "layer multiplication". Conventional layer multiplication equipment is suitable for the layer multiplication step of the invention, such as that described in U.S. patents No. 5,202,074 and 5,628,950 which are incorporated by reference herein in their entirety. Unlike the conventional layer multiplication process, the layer multiplication step of the invention involves producing extrudates containing polymer and a significant amount of first and/or second diluent, e.g., ≥ 1.0 wt.% or ≥ 5.0 wt.%, based on the combined weight of the polymers and the diluents. When each diluent is compatible with (e.g., a good solvent for) both the first and second polymers, combining the first section of the first extrudate with the second section of the first extrudate can result in an interfacial region located between the stacked first and second sections.

In an embodiment, the first extrudate is exposed to an elevated temperature during layer multiplication (the "layer multiplication temperature"). For example, the layer multiplication temperature is ≥ Tm of the polymer in the extrudate having the highest melting point. In an embodiment, the layer multiplication temperature is in the range of Tm + 10°C to Tm + 120°C. In an embodiment, the extrudate is exposed to a temperature that is the same as (+/- 5°C) as the extrusion temperature.

Referring again to Fig. 1, a conventional layer multiplier 106 can be used to separate first and second sections of the first layered extrudate along the machine direction on a line perpendicular to the planar surface of the extrudate. The layer multiplier redirects and "stacks" one section aside or atop the second section to multiply the number of layers extruded and produce the second layered extrudate. Optionally, an asymmetric multiplier can be used to introduce layer thickness deviations throughout the stack of layers in the second layered extrudate, and provide a layer thickness gradient. Optionally, one or more skin layers 111 can be applied to the outer layers of the second layered extrudate by conducting a third mixture of polymer and diluent 108 (for skin layers) to a skin layer feedblock 110. Optionally, the skin layers are produced from the same polymers and diluents used to produce the first and second mixtures, e.g., PE1, PE2, PE3, PP, and/or PMP.

Additional layer multiplication steps (not shown) can be conducted, if desired, to increase the number of layers in the second layered extrudate. The additional layer multiplication steps can be conducted at any point in the process after the first layer multiplication step (e.g., before or after the molding of step 4).

When the first and second polymers are each compatible with the first and second diluents, interdiffusion can occur during layer multiplication under appropriate thermodynamic conditions, resulting in a new interfacial region during each successive layer multiplication. The thickness and the relative amounts of first and second polymers (and the gradients thereof in the thickness direction) in the interfacial regions largely depends on the layer contact times, the polymer species selected for the first and second polymer, the diluent, and the extrudate temperature during layer multiplication and molding, etc.

For a first layered extrudate having two layers and an interfacial region situated therebetween, layer multiplication can result in a total of 2⁽ⁿ⁺²⁾-1 distinct regions (layers plus interfacial regions) in the second layered extrudate, where "n" is an integer ≥ 1 representing the number of layer multiplications.

In an embodiment, extrusion (or, e.g., casting) of the first and second mixtures produces a first extrudate having two layers and one interfacial region as shown in cross section in Fig. 2(A), where Layer 1 (L1) is produced from the first mixture and L2 is produced from the second mixture. A first layer multiplication results in a four-layer extrudate as shown in Fig. 2(B), where L1 and L3 are produced from the first mixture and L2 and L4 are produced from the second mixture. A second layer multiplication results in an eight-layer extrudate where L1, L3, L5, and L7 are produced from the first mixture and L2, L4, L6, and L8 are produced from the second mixture.

The interfacial I1 between L1 and L2 produced during extrusion increases in thickness as layer contact time increases as shown in Fig. 2 (A) through (C). During the first layer multiplication, I1 is divided into a pair of interfacial regions I1 and I3 having approximately equal thickness and located equidistant from the symmetry plane of the second extrudate. The symmetry plane bisects a new interfacial region 12 created during the second layer multiplication by the contact of L2 and L3. Like I1 and 13, 12 will increase in thickness as the contact time between L2 and L3 increases. A second layer multiplication results in an eight layer extrudate as shown in Fig. 2(C). During the second layer multiplication, layers L5 through L8 are separated (e.g., by cutting along MD) from layers L1 through L4, and stacked in face-to face contact with layers L1 through L4 as shown. Thus, layers L1, L3, L5, and L7 are produced from the first mixture and layers L2, L4, L6, and L8 are produced from the second mixture. Interfacial region 17 is obtained from original interfacial region I1. 16 is obtained from 12, and I5 is obtained from I3. A new interface, 14 is created during the second layer multiplication. Additional layer multiplications can be conducted, if desired, either alone of in combination with the molding of step (4).

In this embodiment, the number of layers in the extrudate following n layer multiplications is equal to 2ⁿ⁺¹. The number of interfacial regions in the extrudate is equal to 2ⁿ⁺¹-1. The total number of distinct regions in the extrudate (layers plus interfacial regions) is equal to 2ⁿ⁺²-1, even when the first and second polymers are immiscible polymers, e.g., not compatible with each other.

The thickness of an interfacial region of the extrudate depends on the interlayer contact time "t". When the multilayer extrudate comprises layers of first and second polymer L1 and L2, a sharp interface is formed between L1 and L2 when they are brought together at time t = 0. At t > 0, L1 containing the first mixture and L2 containing the second mixture inter-diffuse into each other, and the sharp interface thus becomes an interfacial region having a thickness T. The thickness T is a function of contact time and diffusion coefficient, and can be estimated using a simplified one-dimensional diffusion model for interfacial regions formed between layers containing the first mixture and layers containing the second mixture (e.g., between L1 and L2), assuming the layer thickness is much thicker than the interfacial region. A parameter φ is defined as the volume concentration of the first mixture in the interfacial region, with φ being in the range of 0 (L2) to 1 in (L1). In other words, φ=1 indicates the presence of a homogeneous first mixture and φ=0 indicates a homogeneous second mixture. The thickness of the interfacial regions can be determined by the methods disclosed in PCT Patent Application Publication No. WO 2010/048397.

### 4. Molding the second layered extrudate

In an embodiment, the second layered extrudate is molded to reduce its thickness. Optionally, the second layered extrudate's layered structure, i.e., layers substantially parallel (e.g., within about 1°) to each other and the planar face of the extrudate, is preserved during molding. The amount of thickness reduction is not critical, and can be in the range, e.g., of from 125% to about 75%, e.g., 105% to 95% of the thickness of the first layered extrudate. In an embodiment, the molding reduces the thickness of the second layered extrudate until it is approximately equal to thickness of the first layered extrudate. Reducing the thickness of the second layered extrudate is generally conducted without a loss in weight per unit length of greater than about 10% based on the weight of the second layered extrudate; accordingly, the molding generally results in a proportionate increase in the second layered extrudate's width (measured in TD). As an example, the molding can be accomplished using a die or dies 112. The molding can be conducted while exposing the extrudate to a temperature (the "molding temperature") ≥ Tm of the polymer in the extrudate (first or second polymer) having the highest melting peak. Optionally, the molding temperature is ≥ Tm of the polymer in the extrudate having the lowest (coolest) melting peak. In an embodiment, the molding temperature is in the range of Tm + 10°C to Tm + 140°C. In an embodiment, the extrudate is exposed to a temperature that is the same as (+/- 5°C) as the extrusion temperature. In another embodiment, the second layered extrudate (or third, fourth, etc. layered extrudate) is subjected to additional layer multiplications before molding.

In an embodiment where a skin layer is applied during (or following) layer multiplication, the skin layers optionally can be applied onto the upper and/or lower surfaces of the film as it is conducted through the skin layer feedblock 110 and die(s) 112. When no skin layer is applied, the outer layers of the extrudate become the skin layers. An extrudate leaving the die(s) is typically in molten form.

Conducting the second layered extrudate through a die is believed to apply sufficient compressive shear to produce a polymeric fibrous morphology in the layers of the second layered extrudate, i.e., a morphology different than the homogeneous morphology of the first extrudate. The fibrous structure is desirable, and is produced in conventional "wet" processes for producing microporous films by stretching the extrudate, e.g., in a tenter machine. Since the molding of the first extrudate creates the desirable fibrous structure, the molding obviates at least a portion (if not all) of the stretching that would otherwise be needed in the conventional wet process.

In a second embodiment for producing the layered extrudate (not illustrated), the layered extrudate sections are molded (extrudate thickness is decreased and surface area is increased) before the sections are stacked to form a layered extrudate having a greater number of layers. The process parameters in the second embodiment, e.g., selection and amounts of polymer and diluent, molding parameters, process temperatures, etc., can be the same as those described in the analogous part of the first embodiment. The microlayer apparatus of the second embodiment is described in more detail in an article Mueller et al. entitled Novel Structures by Microlayer Extrusion-Talc-Filled PP, PC/SAN, and HDPE-LLDPE. A similar process is described in U.S. Pat. No. 3,576,707, U.S. Pat. No. 3,051,453 and U.S. Pat. No. 6,261,674, the disclosures of which are incorporated herein by reference herein in there entirety.

Optional steps for cooling and stretching the layered extrudate (downstream extrudate processing) will now be described in more detail. Although they are not required, such processing is applicable to extrudates produce by the first and second embodiments.

### Downstream Extrudate Processing

Optional cooling and stretching steps can be used in the first and second embodiment. For example, extrudate can be cooled following molding. Cooling rate and cooling temperature are not particularly critical. For example, the layered extrudate can be cooled at a cooling rate of at least about 50°C/min until its temperature (the cooling temperature) is approximately equal to the extrudate's gelation temperature (or lower). Process conditions for cooling can be the same as those disclosed in PCT Patent Application Publication No. WO 2008/016174, for example. The layered extrudate can be stretched, if desired. Stretching (also called "'orientation"), when used, can be conducted before and/or after extrudate molding. Stretching can be used even when a fibrous structure is produced in the layered extrudate during the molding. Optionally, the extrudate is exposed to an elevated temperature (the stretching temperature), e.g., at the start of stretching or in a relatively early stage of stretching (for example, before 50% of the stretching has been completed), aid the uniformity of stretching. In an embodiment, the stretching temperature is ≤ the Tm of the polymer in the extrudate having the lowest (coolest) melting peak. Neither the choice of stretching method nor the degree of stretching magnification is particularly critical stretching can be symmetric or asymmetric, and the order of stretching can be sequential or simultaneous. Stretching conditions can be the same as those disclosed in PCT Patent Application Publication No. WO 2008/016174, for example.

The relative thickness of the first and second layers of the extrudate made by the foregoing embodiments can be controlled, e.g., by one or more of (i) regulating the relative feed ratio of the first and second mixtures into the extruders, (ii) regulating the relative amount of polymer and diluent in the first and second mixtures, etc. In addition, one or more extruders can be added to the apparatus to increase the number of different polymers in the multi-layer microporous membrane. For example, a third extruder can be added to add a tie layer to the extrudate.

### Producing the multi-layer microporous membrane from the multilayer extrudate

In an embodiment, at least a portion of the first and second are removed (or displaced) from the layered extrudate in order to form a liquid-permeable multi-layer microporous membrane. A displacing (or "washing") solvent can be used to remove (wash away, or displace) the first and second diluents. Process conditions for removing first and second diluents can be the same as those disclosed in PCT Patent Application Publication No. WO 2008/016174, for example. Removing the diluent (and cooling the extrudate as described below) reduces the value of the diffusion coefficient, resulting in little or no further increase in the thicknesses of the interfacial regions.

### Optional membrane drying

In an embodiment, at least a portion of any remaining volatile species is removed from the membrane (membrane "drying") following diluent removal. For example, the membrane can be dried by removing at least a portion of the washing solvent. Any method capable of removing the washing solvent can be used, including conventional methods such as heat-drying, wind-drying (moving air), etc. Process conditions for removing volatile species such as washing solvent can be the same as those disclosed in PCT Patent Application Publication No. WO 2008/016174, for example. It is observed that when the membrane comprises:
(a) a plurality of first microlayers each comprising a first polymer and having a thickness< 1.0 µm; and
(b) a plurality of second microlayers each comprising a second polymer and having a thickness≤ 1.0 µm; wherein the first polymer comprises ≥ 20.0 wt.% PMP based on the weight of the first polymer, the second comprises > 80.0 wt.% based on the weight of the second polymer of a polymer incompatible with the PMP of the first polymer,
a fibrous morphology similar to that observed in conventional microporous monolayer membranes produced in the "wet" process forms at the interfacial regions between adjacent first and second microlayers. This fibrous morphology is beneficial in that is aids washing solvent removal. When the fibrous morphology is not present, e.g., when the interfacial regions have relatively a large pore size (characteristic of the lack of a sufficiently fibrous morphology), it is more difficult to extract the washing solvent by drying or other means.

### Optional membrane stretching

In an embodiment, the membrane is stretched at any time after diluent removal. The stretching method selected is not critical, and conventional stretching methods can be used such as by tenter methods, etc. Optionally, the membrane is heated during stretching. The stretching can be, e.g., monoaxial or biaxial. When biaxial stretching is used, the stretching can be conducted simultaneously in, e.g., the MD and TD directions, or, alternatively, the multilayer microporous polyolefin membrane can be stretched sequentially, for example, first in MD and then in TD. In an embodiment, simultaneous biaxial stretching is used.

The liquid-permeable multi-layer microporous membrane can be exposed to an elevated temperature during dry stretching (the "dry stretching temperature"). The dry stretching temperature is not critical. In an embodiment, the dry stretching temperature is approximately equal to Tm or lower, for example in the range of from about the crystal dispersion temperature ("Tcd") to about Tm, where Tm is the melting point of the polymer in the membrane having the lowest melting peak among the polymers in the membrane. In an embodiment, the dry stretching temperature ranges from about 90°C to about 135°C, for example from about 95°C to about 130°C.

When dry-stretching is used, the stretching magnification is not critical. For example, the stretching magnification of the multilayer membrane can range from about 1.1 fold to about 1.8 fold in at least one planar (e.g., lateral) direction. Thus, in the case of monoaxial stretching, the stretching magnification can range from about 1.1 fold to about 1.8 fold in MD or TD. Monoaxial stretching can also be accomplished along a planar axis between MD and TD.

In an embodiment, biaxial stretching is used (i.e., stretching along two planar axes) with a stretching magnification of about 1.1 fold to about 1.8 fold along both stretching axes, e.g., along both the longitudinal and transverse directions. The stretching magnification in the longitudinal direction need not be the same as the stretching magnification in the transverse direction. In other words, in biaxial stretching, the stretching magnifications can be selected independently. In an embodiment, the dry-stretching magnification is the same in both stretching directions.

In an embodiment, dry stretching involves stretching the membrane to an intermediate size as described above (generally to a magnification that is from about 1.1 fold to about 1.8 fold larger than the membrane's size in the stretching direction at the start of dry-stretching) and then subjecting the membrane to a controlled size reduction in the stretching direction to achieve a final membrane size in the stretching direction that is smaller than the intermediate size but larger than the size of the membrane in the stretching direction at the start of dry stretching. Generally, during relaxation the film is exposed to the same temperature as is the case during the dry-stretching to the intermediate size. In another embodiment, the membrane is stretched to an intermediate size that is larger than about 1.8 fold the size of the membrane at the start of dry-stretching, as long as the final size of the membrane (e.g., the width measured along TD when the stretching is along TD) in either or both planar directions (MD and/or TD) is in the range of 1.1 to 1.8 fold the size of the film at the start of the dry-stretching step. As a non-limiting example, the membrane is stretched to an initial magnification of about 1.4 to 1.7 fold in MD and/or TD to an intermediate size, and then relaxed to a final size at a magnification of about 1.2 to 1.4 fold, the magnifications being based on the size of the film in the direction of stretching at the start of the dry-stretching step. In another embodiment, the membrane is dry-stretched in TD at an initial magnification to provide a membrane having an intermediate size in TD (an intermediate width) and then relaxed to a final size in TD that is in the range of about 1% to about 30%, for example from about 5% to about 20%, of the intermediate size in TD. Optionally, the size reduction (e.g., a thermal relaxation) is accomplished by moving the tenter clips gripping the edges of the membrane toward the center line of MD.

The stretching rate is optionally 3 %/second or more in a stretching direction. In the case of monoaxial stretching, stretching rate is 3 %/second or more in a longitudinal or transverse direction. In the case of biaxial stretching, stretching rate is 3 %/second or more in both longitudinal and transverse directions. It is observed that a stretching rate of less than 3 %/second decreases the membrane's permeability, and provides the membrane with large variation in measured properties across the membrane along TD (particularly air permeability). Optionally, the stretching rate is ≥ 5 %/sec, such as in the range of 10 %/sec to 50 %/sec.

Further optional processing such as heat treatment, cross-linking, and hydrophilizing treatment can be conducted, if desired, under the conditions disclosed in PCT Patent Application Publication No. WO 2008/016174, for example.

### Properties of the liquid-permeable multi-layer microporous membrane

In an embodiment, the membrane is liquid-permeable film comprising liquid-permeable microporous microlayers. The membrane has a thickness ≥ 1.0 µm, e.g., a thickness in the range of from about 3.0 µm to about 250.0 µm, for example from about 5.0 µm to about 50.0 µm. Thickness meters such as the Litematic available from Mitsutoyo Corporation are suitable for measuring membrane thickness. Noncontact thickness measurement methods are also suitable, e.g., optical thickness measurement methods. In an embodiment, the membrane further comprises an interfacial region located between at least two of the microlayers. In this case, the sum of the number of distinct compositional regions in the membrane (layers containing the first polymer, layers containing the second polymer, and interfacial regions containing both the first and second polymer) is an odd number equal to 2ⁿ⁺²-1, where "n" is an integer ≥ 1 which can be equal to the number of layer multiplications. A "beta factor" ("β") can be used to describe the liquid-permeable multi-layer microporous membrane, where β is equal to the thickness of the thickest interfacial region divided by the thickness of the thinnest interfacial region. Generally, for the membranes of the invention, β > 1.0, e.g., in the range of about 1.05 to 10, or 1.2 to 5, or 1.5 to 4.

Optionally, the membrane can have one or more of the following properties: A. Porosity ≥ 20.0%
The membrane's porosity is measured conventionally by comparing the membrane's actual weight to the weight of an equivalent non-porous membrane of 100% polyethylene (equivalent in the sense of having the same length, width, and thickness). Porosity is then determined using the formula: Porosity % = 100 x (w2-w1)/w2, "w1" is the actual weight of the liquid-permeable multi-layer microporous membrane and "w2" is the weight of an equivalent non-porous membrane (of the same polymers) having the same size and thickness. In an embodiment, the membrane's porosity is in the range of 25.0% to 85.0%.

### B. Normalized air permeability ≤ 1.0 x 10³ seconds/100 cm³/20 µm

In an embodiment, the liquid-permeable multi-layer microporous membrane has a normalized air permeability ≤ 1.0 x 10³ seconds/100cm³/20 µm (as measured according to JIS P 8117). Since the air permeability value is normalized to the value for an equivalent membrane having a film thickness of 20 µm, the membrane's air permeability value is expressed in units of "seconds/100cm³/20 µm". Optionally, the membrane's normalized air permeability is in the range of from about 20.0 seconds/100cm³/20 µm to about 500.0 seconds/100cm³/20 µm, or from about 100.0 seconds/100cm³/20 µm to about 400.0 seconds/100cm³/20 µm. Normalized air permeability is measured according to JIS P 8117, and the results are normalized to the permeability value of an equivalent membrane having a thickness of 20 µm using the equation A = 20 µm *(X)/T₁, where X is the measured air permeability of a membrane having an actual thickness T₁ and A is the normalized air permeability of an equivalent membrane having a thickness of 20 µm.

It is observed in conventional multilayer membranes having at least one layer comprising PMP, that the membrane's air permeability is < that of similar membranes produced from PE only. A portion of the conventional membrane's air permeability can be recovered by including PP in the layers comprising PMP, which undesirably reduces the membrane's meltdown temperature. It is believed that the permeability loss results from the collapse of a portion of the membrane's fibrous morphology during diluent removal. It is observed that the multi-layer microporous membranes of the invention have an air permeability comparable to that of conventional polyethylene microporous membranes even when little (e.g., ≤ 5.0 wt.%) of PP is included in the layers comprising PMP. It is believed that this results from greater stability of the fibrous structure during diluent extraction.

### C. Normalized pin puncture strength ≥ 1.0 x 10³ mN/ 20 µm

The membrane's pin puncture strength is expressed as the pin puncture strength of an equivalent membrane having a thickness of 20 µm and a porosity of 50% [gf/20 µm]. Pin puncture strength is defined as the maximum load measured at ambient temperature when the liquid-permeable multi-layer microporous membrane having a thickness of T₁ is pricked with a needle of 1 mm in diameter with a spherical end surface (radius R of curvature: 0.5 mm) at a speed of 2mm/sec. The pin puncture strength ("S") is normalized to the pin puncture strength value of an equivalent membrane having a thickness of 20 µm and a porosity of 50% using the equation S₂ = [50%*20 µm *(S₁)]/[T₁*(100% - P)], where S₁ is the measured pin puncture strength, S₂ is the normalized pin puncture strength, P is the membrane's measured porosity, and T₁ is the average thickness of the membrane.

Optionally, the membrane's normalized pin puncture strength is ≥ 3.0 x 10³ mN/20 µm, e.g., ≥ 5.0 x 10⁴ mN/20 µm, such as in the range of 3.0 x 10³ mN/20 µm to 8.0 x 10³ mN/20 µm.

### D. Tensile strength ≥ 1.2 x 10³ Kg/cm²

Tensile strength is measured in MD and TD according to ASTM D-882A. In an embodiment, the membrane's MD tensile strength is in the range of 1,000 Kg/cm² to 2,000 Kg/cm², and TD tensile strength is in the range of 1,200 Kg/cm² to 2,300 Kg/cm².

### E. Shutdown temperature < 140.0°C

The shutdown temperature of the liquid-permeable multi-layer microporous membrane is measured by a thermomechanical analyzer (TMA/SS6000 available from Seiko Instruments, Inc.) as follows: A rectangular sample of 3 mm x 50 mm is cut out of the liquid-permeable multi-layer microporous membrane such that the long axis of the sample is aligned with the membrane's TD and the short axis is aligned MD. The sample is set in the thermomechanical analyzer at a chuck distance of 10 mm, i.e., the distance from the upper chuck to the lower chuck is 10 mm. The lower chuck is fixed and a load of 19.6 mN applied to the sample at the upper chuck. The chucks and sample are enclosed in a tube which can be heated. Starting at 30°C, the temperature inside the tube is elevated at a rate of 5°C/min, and sample length change under the 19.6 mN load is measured at intervals of 0.5 second and recorded as temperature is increased. The temperature is increased to 200°C. "Shutdown temperature" is defined as the temperature of the inflection point observed at approximately the melting point of the polymer having the lowest melting point among the polymers used to produce the membrane. In an embodiment, the membrane has a shutdown temperature < 130.5°C, e.g., in the range of 120.0°C to 130.0°C, e.g., from 124.0°C to 129.0°C.

### F. Meltdown temperature ≥ 165.0 °C

Meltdown temperature is measured by the following procedure: A rectangular sample of 3 mm x 50 mm is cut out of the liquid-permeable multi-layer microporous membrane such that the long axis of the sample is aligned with TD and the short axis is aligned with MD. The sample is set in the thermomechanical analyzer (TMA/SS6000 available from Seiko Instruments, Inc.) at a chuck distance of 10 mm, i.e., the distance from the upper chuck to the lower chuck is 10 mm. The lower chuck is fixed and a load of 19.6 mN applied to the sample at the upper chuck. The chucks and sample are enclosed in a tube which can be heated. Starting at 30°C, the temperature inside the tube is elevated at a rate of 5°C/min, and sample length change under the 19.6 mN load is measured at intervals of 0.5 second and recorded as temperature is increased. The temperature is increased to 200°C. The meltdown temperature of the sample is defined as the temperature at which the sample breaks, generally at a temperature in the range of about 145°C to about 200°C. In an embodiment, the meltdown temperature is ≥ 180°C, e.g., in the range of from 180°C to 200°C, e.g., 185°C to about 195°C.

In an embodiment, the membrane comprises a plurality of alternating first and second microlayers, wherein (i) the first and second microlayers are interior layers of the membrane, (ii) the first microlayer comprises polyethylene having a Tm ≤ 130°C and an Mw in the range of 1.5 x 10³ to 1.0 x 10⁵ and the second microlayer comprises polypropylene having an Mw in the range of 1.1 x 10⁶ to 1.5 x 10⁶ and a ΔHm ≥ 90.0 J/g, and (iii) each of the second microlayers has a thickness in the range of 0.01 to 0.5 times the thickness of the thickest nearest alternating first microlayers. Optionally, each of the plurality of first microlayers has a substantially different thickness from its nearest-neighbor first microlayers, and each of the plurality of second microlayers has a substantially different thickness from its nearest-neighbor second microlayers. Such a membrane is useful as a battery separator film because, it is believed, the relatively thick first microlayers and relatively thin second microlayers lead to an appropriate balance of membrane shutdown temperature, meltdown temperature, and pin puncture strength.

### 5. Battery

Liquid-permeable multi-layer microporous membranes are useful as battery separators in e.g., lithium ion primary and secondary batteries. Such batteries are described in PCT Patent Application Publication No. WO 2008/016174.

The battery is useful for powering one or more electrical or electronic components. Such components include passive components such as resistors, capacitors, inductors, including, e.g., transformers; electromotive devices such as electric motors and electric generators, and electronic devices such as diodes, transistors, and integrated circuits. The components can be connected to the battery in series and/or parallel electrical circuits to form a battery system. The circuits can be connected to the battery directly or indirectly. For example, electricity flowing from the battery can be converted electrochemically (e.g., by a second battery or fuel cell) and/or electromechanically (e.g., by an electric motor operating an electric generator) before the electricity is dissipated or stored in a one or more of the components. The battery system can be used as a power source for powering relatively high power devices such as electric motors in power tools and electric or hybrid electric vehicles.

### EXAMPLES

The present invention will be explained in more detail referring to examples below without intention of restricting the scope of the present invention.

### Example 1

### (1) Preparation of the first mixture

A first mixture was prepared as follows. First, combine (a) 25.0 wt.% of polymethylpentene (Mitsui Chemicals, Inc. TPX: MX002) having an MFR of 21 dg/min and a Tm of 222°C (the PMP), (b) 5.0 wt.% of isotactic PP having an Mw of 1.1 x 10⁶ and a Tm of 163.8°C (the PP), (c) 40.0 wt.% of PE having an Mw of 5.6 x 10⁵ and a Tm of 134.0°C (the PE1), and (d) 30.0 wt.% of PE having a Mw of 1.9 x 10⁶ and a Tm of 136.0°C (the PE2), the weight percent being based on the weight of the combined polymer.

Next, 25.0 wt.% of the combined polymer was charged into a strong-blending double-screw extruder having an inner diameter of 58 mm and L/D of 42, and 72.5 wt.% liquid paraffin (50 cst at 40°C) is supplied to the double-screw extruder via a side feeder. Mixing is conducted at 220°C and 200 rpm to produce the first mixture, the weight percent being based on the weight of the first mixture. The composition of the mixture and concentration are shown in Table 1.

### (2) Preparation of the second mixture

A second mixture was prepared in the same manner as the first except as follows: The combined polymer includes (a) 82.0 wt.% of the PE1, and (d) 18.0 wt.% of the PE2, the weight percents being based on the weight of the combined polymer. 25.0 wt.% of the combined polymer was charged into the strong-blending double-screw extruder and 75.0 wt.% of the liquid paraffin is supplied to the side feeder. Mixing was conducted at 220°C and 400 rpm to produce the second mixture.

### (3) Extrusion

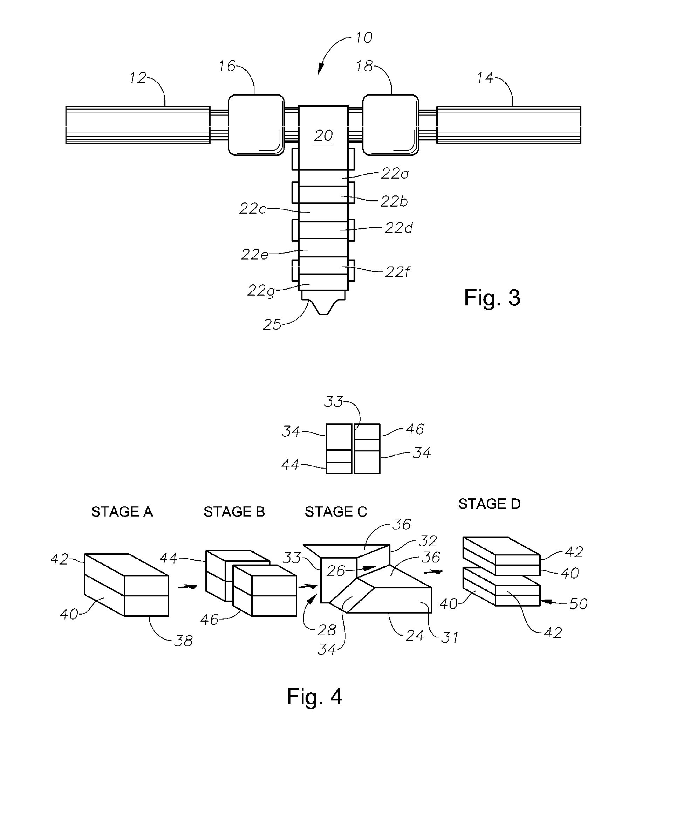

The first and second mixtures was combined to produce a two-layer extrudate having a total thickness of 1.0 mm comprising one layer of the first mixture having a thickness of 0.5 mm and one layer of the second mixture having a thickness of 0.5 mm. The layered extrudate was then conducted to a sequence of 9 layer-multiplication stages. Each stage, shown schematically in Fig. 3 and Fig. 4, layer-multiply the extrudate while exposing the extrudate to a temperature of 210°C.

Accordingly, the first mixture was extruded through the first single screw extruder 12 into the coextrusion block 20, and the second mixtures was extruded through the second single screw extruder 14 into the same coextrusion block 20. In the coextrusion block 20, a two-layer extrudate 38 such as that illustrated at stage A in Fig. 4 was formed with the layer 42 comprising the first mixture on top of the layer 40 comprising the second mixture. The layered extrudate was then extruded through the series of 9 multiplying elements 22a-g to produce a 1,024-microlayer extrudate with microlayers comprising the first mixture alternating with microlayers comprising the second mixture, with interfacial regions situated between the alternating microlayers. The extrudate residence time in each layer-multiplication stage was approximately 2.5 seconds. The microlayer extrudate had a thickness of 1.0 mm and a width of 0.1 m.

The microlayer extrudate was then cooled while passing through cooling rollers controlled at 20°C, to form a cooled microlayer extrudate, which is simultaneously biaxially stretched at 115°C to a magnification of 5 fold in both MD and TD by a tenter stretching machine. The stretched extrudate was fixed to an aluminum frame of 20 cm x 20 cm, immersed in a bath of methylene chloride controlled at 25°C to remove liquid paraffin with vibration of 100 rpm for 3 minutes, and dried by air flow at room temperature. The membrane was then heat-set at 115°C for 10 minutes to produce the finished liquid-permeable multi-layer microporous membrane having 1,024 microlayers, each microlayer having a thickness 0.040 µm, the membrane having a width of 2.5 m and a thickness of 40.0 µm. The membrane's properties are shown in Table 2.

### Examples 2 and 3

Example 1 is repeated except as shown the first composition of the mixture in Table 1 to produce the final liquid-permiable multi-layer microporous membranes. The membrane's properties are shown in Table 2.

**[Table 1]**

| | Solvent concentration of the first mixture (wt.%) | Solvrnt concentration of liquid paraffin (wt.%) | The first mixture | | | |
|---|---|---|---|---|---|---|
| | | | (a) | (b) | (c) | (d) |
| | | | PMP wt.% | PP wt.% | PE1 wt.% | PE2 wt.% |
| Example 1 | 25 | 75 | 25 | 5 | 40 | 30 |
| Example 2 | 25 | 75 | 20 | 20 | 30 | 30 |
| Example 3 | 27.5 | 72.5 | 30 | 30 | 10 | 30 |

**[Table 2]**

| Properties | Microlayer Extrudate | Liquid-permeable microlayer membrane of Example 1 | Liquid-permeable microlayer membrane of Example 2 | Liquid-permeable microlayer membrane of Example 3 |
|---|---|---|---|---|
| Thickness (µm) | 1.0 x 10³ | 40 | 40 | 40 |
| Width (m) | 0.1 | 2.5 | 2.5 | 2.5 |
| Number of microlayers | 1024 | 1024 | 1024 | 1024 |
| Microlayer thickness (µm) | 0.98 | ≤ 0.040 | ≤ 0.040 | ≤ 0.040 |
| Normalized air permeability (seconds/100 cm³ /20 µm) | n/a | 1000 | 478 | 213 |
| Porosity (%) | n/a | 35 | 41 | 56 |
| Normalized pin puncture strength (mN/ 20 µm) | n/a | 307 | 278 | 206 |
| Shutdown temperature ^{*1} | n/a | ○ | ○ | ○ |
| Meltdown temperature ^{*2} | n/a | ○ | ○ | ○ |
| Tensile strength ^{*3} | n/a | ○ | ○ | ○ |

| | | | | |
|---|---|---|---|---|
| ^{*1} ○ means shutdown temperature is 140.0°C or lower ^{*2} ○ means meltdown temperature is 165.0°C or higher ^{*3} ○ means tensile strength is 1.2 x 10³ Kg/cm² or more | | | | |

### Comparative Example 1

Comparative Example 1 used the same first and second mixtures as in Example 1. The membrane was produced as follows. The first and second mixtures are conducted to a two-layer-extruding die, and extruded therefrom to form a layered extrudate of first mixture/second mixture at a layer thickness ratio of 50/50. The extrudate is then cooled while passing through cooling rollers controlled at 20°C, to form a cooled extrudate, which was simultaneously biaxially stretched at 115°C to a magnification of 5 fold in both MD and TD by a tenter stretching machine. The stretched extrudate was fixed to an aluminum frame of 20 cm x 20 cm, immersed in a bath of methylene chloride controlled at 25°C to remove liquid paraffin with vibration of 100 rpm for 3 minutes. The membrane delaminated during liquid paraffin removal.

As can be seen in the Table, the multi-layer microporous membrane of the present invention had both a desirable meltdown temperature (obtained from microlayers containing the first polymer) and desirable strength and permeability temperature (obtained, it is believed, primarily from microlayers containing the second polymer). This result is achieved without delamination even though the first and second polymers are incompatible.

All patents, test procedures, and other documents cited herein, including priority documents, are fully incorporated by reference to the extent such disclosure was not inconsistent and for all jurisdictions in which such incorporation is permitted.

While the illustrative forms disclosed herein have been described with particularity, it will be understood that various other modifications will be apparent to and can be readily made by those skilled in the art without departing from the spirit and scope of the disclosure. Accordingly, it is not intended that the scope of the claims appended hereto be limited to the examples and descriptions set forth herein but rather that the claims be construed as encompassing all the features of patentable novelty which reside herein, including all features which would be treated as equivalents thereof by those skilled in the art to which this disclosure pertains.

When numerical lower limits and numerical upper limits are listed herein, ranges from any lower limit to any upper limit are contemplated.

### INDUSTRIAL APPLICABILITY

The multi-layer microporous membrane of the present invention can be used as battery separator film ("BSF") in primary and secondary batteries such as lithium ion primary and secondary batteries and a power source of electric vehicles and hybrid electric vehicles.

### EXPLANATION OF NOTIFICATIONS

- 10:: Coextrusion die system
- 12:: The first single extruder
- 14:: The second single extruder
- 16:: The first measuring pump
- 18:: The second measuring pump
- 20:: Coextrusion block
- 22a-g:: Multiplying elements
- 24:: Multiplying block (Die element)
- 25:: Extrusion nozzle
- 26:: Pass of the first divided two-layer extrudate
- 28:: Pass of the second divided two-layer extrudate
- 31, 32:: Adjacent block
- 33:: Dividing wall (Dividing surface of divided two-layer extrudate)
- 34:: Slope path (Upward slope of the first divided two-layer extrudate)
- 36:: Widening surface (Widening platform of the first divided two-layer extrudate)
- 38:: Two-layer extrudate
- 40:: Layer comprising the second mixture
- 42:: Layer comprising the first mixture
- 44:: The second divided two-layer extrudate
- 46:: The first divided two-layer extrudate
- 50:: Four-layer extrudate
- 100:: The first mixture
- 101:: The first extruder
- 102:: The second mixture
- 103:: The second extruder
- 104:: Feedblock
- 105:: Multilayer extrudate
- 106:: Layer multiplier
- 108:: The third mixture (for skin layers)
- 110:: Skin layer feedblock
- 111:: Skin layers
- 112:: Die
- L1:: Layer 1
- L2:: Layer 2
- L3:: Layer 3
- L4:: Layer 4
- L5:: Layer 5
- L6:: Layer 6
- L7:: Layer 7
- L8:: Layer 8
- I1:: Interfacial region between L1 and L2
- I2:: Interfacial region between L2 and L3
- I3:: Interfacial region between L3 and L4
- I4:: Interfacial region between L4 and L5
- I5:: Interfacial region between L5 and L6
- I6:: Interfacial region between L6 and L7
- I7:: Interfacial region between L7 and L8

## Claims

1. A multi-layer microporous membrane comprising (a) a plurality of first microlayers each comprising a first polymer and having a thickness < 1.0 µm and (b) a plurality of second microlayers each comprising a second polymer and having a thickness ≤ 1.0 µm; wherein the first polymer comprises ≥ 20.0 wt.% polymethylpentene based on the weight of the first polymer, the second polymer comprises > 80.0 wt.% based on the weight of the second polymer of a polymer incompatible with the polymethylpentene of the first polymer, and the membrane is liquid permeable and microporous.

2. The multi-layer microporous membrane of claim 1, wherein at least one first microlayer and at least one second microlayer are interior layers of the membrane.

3. The multi-layer microporous membrane of claims 1 or 2, wherein the first polymer comprises ≥ 25.0 wt.% polymethylpentene and (ii) the second polymer comprises ≥ 90.0 wt.% polyethylene.

4. The multi-layer microporous membrane of claim 3, wherein the polyethylene has a Tm ≥ 130.0°C and an Mw ≥ 1.0 x 10⁵.

5. The multi-layer microporous membrane of any of claims 1-4, wherein the polymethylpentene has an MFR ≤ 1.0 dg/min. and a Tm in the range of 215°C to 225°C.

6. The multi-layer microporous membrane of any of claims 1-5, wherein the membrane has a normalized air permeability ≤ 1.0 x 10³ seconds/100cm³/20 µm, and a normalized pin puncture strength in the range of ≥ 2.0 x 10³ mN/20 µm.

7. The multi-layer microporous membrane of any of claims 1-6, wherein the membrane has a meltdown temperature ≥ 145.0°C and a shutdown temperature < 140.0°C.

8. The multi-layer microporous membrane of any of claims 1-7, wherein the first and second microlayers each have a thickness ≥ 25.0 nm.

9. The multi-layer microporous membrane of any of claims 3-8, further comprising interfacial regions located between the first and second microlayers, at least some of the interfacial regions having a thickness ≥ 25.0 nm.

10. A battery separator film comprising the multi-layer microporous membrane of any preceding claim.

11. A method for making a multi-layer microporous membrane comprising:
manipulating a first layered article comprising first and second layers to produce a second layered article having an increased number of layers, the first layer comprising a first polymer and a first diluent miscible with the first polymer and the second layer comprising a second polymer and a second diluent miscible with the second polymer, wherein (i) the first polymer comprises ≥ 20.0 wt.% polymethylpentene based on the weight of the first polymer and (ii) the second polymer comprises > 80.0 wt.% based on the weight of the second polymer of a polymer incompatible with the polymethylpentene of the first polymer; and
reducing the first layered article's thickness and increasing the first layered article's width before producing the second layered article, and/or reducing the second layered article's thickness and increasing the second layered article's width; and
removing at least a portion of the first and second diluents from the second layered article.

12. The method of claim 11, wherein the second polymer comprises ≥ 90.0 wt.% polyethylene.

13. The method of claim 12, wherein the polyethylene has a Tm ≤ 130.0°C and an Mw in the range of 1.5 x 10³ to 1.0 x 10⁵.

14. The method of claim 13, wherein at least one of the first and second polymers further comprises polyethylene having a Tm > 130.0°C.

15. The method of claim 14, wherein at least one of the first and second polymers further comprises a second polyethylene, the second polyethylene having an Mw ≥ 1.0 x 10⁶.

16. The method any of claims 11-14, wherein at least one of the first or second polymers that comprises polypropylene having an Mw in the range of 1.1 x 10⁶ to 1.5 x 10⁶ and a ΔHm ≥ 90.0 J/g.

17. The method of claim 16, wherein the first and second diluents are substantially the same diluent.

18. The method any of claims 11-17, further comprising stretching the second article in at least one planar direction before and/or after diluent removal.

19. The method any of claims 11-18, further comprising exposing the multi-layer microporous membrane to an elevated temperature after diluent removal.

20. The membrane product of any of claims 11-19.

21. A battery comprising an electrolyte, an anode, a cathode, and a separator situated between the anode and the cathode, the separator comprising a multi-layer microporous membrane comprising (a) a plurality of first microlayers each comprising a first polymer and having a thickness ≤ 1.0 µm and (b) a plurality of second microlayers each comprising a second polymer and having a thickness ≤ 1.0 µm; wherein the first polymer comprises ≥ 20.0 wt.% polymethylpentene based on the weight of the first polymer, the second polymer comprises > 80.0 wt.% based on the weight of the second polymer of a polymer incompatible with the polymethylpentene of the first polymer.

22. The battery of claim 21, wherein the battery is a lithium ion secondary battery, a lithium-polymer secondary battery, a nickel-hydrogen secondary battery, a nickelcadmium secondary battery, a nickel-zinc secondary battery, or a silver-zinc secondary battery.

23. The battery of claim 22, wherein the cathode comprises a current collector and a cathodic active material layer on the current collector capable of absorbing and discharging lithium ions.

24. The battery of claim 23, wherein the electrolyte comprises lithium salts in an organic solvent.
